# EUROPEAN PATENT APPLICATION

(11) **EP 4 265 144 A1**
(43) Date of publication of application: **25.10.2023**
(21) Application number: 22196782.1
(22) Date of filing: 21.09.2022
(51) Int. Cl.: A43D 1/02, A43D 3/02, B29D 35/06, B29D 35/08

(54) **SHOE AND MIDSOLE MOLDING METHOD**

(30) Priority: 20.04.2022 TW 111115053
(71) Applicant: Shih, Min-Chih, New Taipei City 235 (TW); Shih, Cheng-Yu, New Taipei City 235 (TW); Shih, Cheng-Lung, New Taipei City 235 (TW)
(72) Inventor: Shih, Min-Chih, New Taipei City 235 (TW); Shih, Cheng-Yu, New Taipei City 235 (TW); Shih, Cheng-Lung, New Taipei City 235 (TW)
(74) Representative: Straus, Alexander

(57) **Abstract**

A midsole molding method includes the following steps: creating an upper surface model of a midsole based on a personalized foot information and a human factor information; installing or forming the upper surface model on a bottom of the production mold; and placing the upper surface model inside a sole mold, to form the midsole between the upper surface model and the sole mold. Through the above molding method, the midsole can have ergonomic designs to have the support of insoles, to rectify the gait, or to relieve partial pressure etc. The disclosure can offer a foot-improving effect without the need to place insoles inside the shoe.

## Description

### BACKGROUND

### Technical Field

The present disclosure relates generally to a midsole and its molding method. Such a midsole can support or improve the foot without the need to configure an ordinary insoles or a customized insoles.

### Related Art

The fitness of a shoe is directly related to the comfort of the foot. Unfortunately, led by the trend of automated production, the shoe industry is gradually developing toward uniform sizes. When purchasing a pair of shoes with a favorite appearance, consumers will have to buy a pair of insoles and place them inside the shoes to better meet the requirement of comfort.

However, because the foot shape may differ between different people, the market of customized insoles is emerging. Customized insoles not only provide better comfort, but also help relieve pressure. Some insoles can even help rectify the wearer's gait. All these are the advantages of customized insoles. However, even if customized insoles are used, the requirement for foot comfort is not satisfied because the insoles are not designed according to the inner space of the shoes. For example: in order to meet the need for support or pressure relief, the insoles will naturally have a predetermined thickness, which reduces the original space inside the shoes. On the other hand, if the insole does not perfectly fit the internal bottom surface of the shoe, the insole will deform under pressure, leading to affected performance of the original design of the supporting or pressure-relieving structure of the insole.

### SUMMARY

Based on the above objects, the present disclosure provides a midsole molding method, comprising the following steps: based on a personalized foot information and a human factor information, creating an upper surface model of a midsole ; installing or forming the upper surface model on a bottom of a production mold; and placing the upper surface model inside a sole mold, to form a midsole between the upper surface model and sole mold.

Through the above-mentioned molding method, the midsole have ergonomic designs to offer the support of a insole (shoe-pad, to relieve pressure, or to improve the gait of the wearer. Thus, improved effect for the foot may be achieved without the need to place ordinary or customized insoles inside the shoes.

One kind of the molding method for the upper surface model of an insole carries out as follows: the production mold is a shoe last; the upper surface model is installed on a bottom of the shoe last; the midsole is formed between the shoe last and the sole mold by injection molding. In such a modeling method, a lower portion of the shoe last and an upper portion of the upper surface model can match each other through concave and convex surfaces. Thus, one shoe last base seat can match multiple sole models.

Another molding method for the upper surface model of the midsole carries out as follows: the production mold is an upper mold ; the upper surface model is formed on an inner surface of the upper mold; and the midsole is formed between the upper surface model and the sole mold by casting.

In addition, the upper surface model is placed in front of the sole mold, and the shoe outsole is placed inside the sole mold.

In addition, the human factor information is designed to improve at least one or more of a fore-foot pressure, a rear-foot pressure, a gait information, and a foot arc information.

In addition, the upper surface model has at least one adjusting position, to correspond to at least one or more of a metatarsus area, an arc area, a fore-foot area, and a rear-foot area. Preferably, the upper surface model can also be configured with a reinforcement or an implant.

In addition, the upper surface model can also be created based on the personalized foot information, the human factor information, and a material property of the midsole material.

The present disclosure also provides a shoe, said shoe comprise a midsole modeled using the above-mentioned molding method. As the upper surface of the midsole already has an ergonomic design, the shoe can offer support or improvement to the foot without the need for additional placement of an insole.

### BRIEF DESCRIPTION OF THE DRAWINGS

Fig. 1 is a flow chart of the midsole molding method.
Fig. 2 is a schematic view of the sole model.
Fig. 3 is a schematic view of the shoe molding method.
Fig. 4 is another schematic view of the shoe molding method.

### DETAILED DESCRIPTION

For better understanding of person having ordinary skill in the art, the following descriptions are provided based on the precondition that the position of the shoe upper is regarded as the top of the shoe.

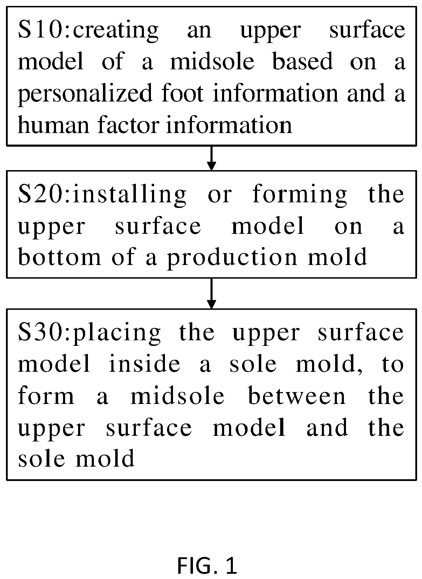

Please refer to Fig. 1, which provides a midsole molding method, which at least comprises the following steps:
Step S10, based on a personalized foot information and a human factor information, creating an upper surface model of a midsole.

The personalized foot information is obtained through a foot examination apparatus, including at least one or more of a fore-foot pressure, a rear-foot pressure, a gait information, and a foot arc information. The human factor information refers to ergonomic designs to improve the personal gait, to relieve foot pressure, or to support the foot arc, so as to enhance the health and comfort of the foot.

The upper surface model of the midsole is related to the model of the structural distribution of the top surface of the midsole, and is also related to a physical model of the pressure range of the corresponding foot sole. In other words, the surface structural distribution of the upper surface model corresponds to the overall condition of the sole of a particular user.

It is to be noted that, in general use, the human factor information is used in the design of the upper surface model and its corresponding midsole to provide comfort or support. It may also be used for particular activities, such as long-distance running, sprinting, or climbing, to better prepare the user for such activities. Such information can also be used to improve foot defects, such as hallux valgas, high arc or low arc, by designing the midsole to provide sufficient support.

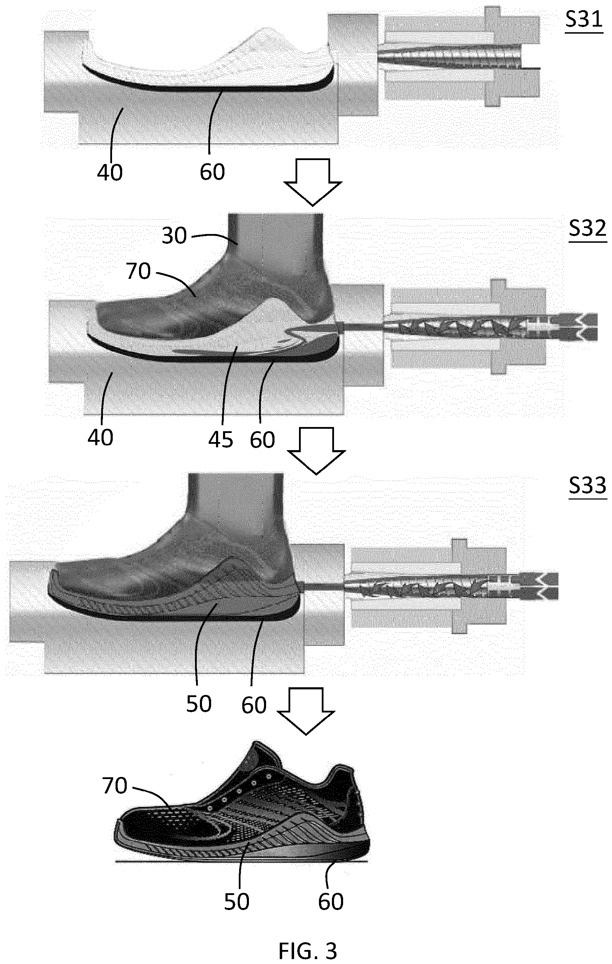

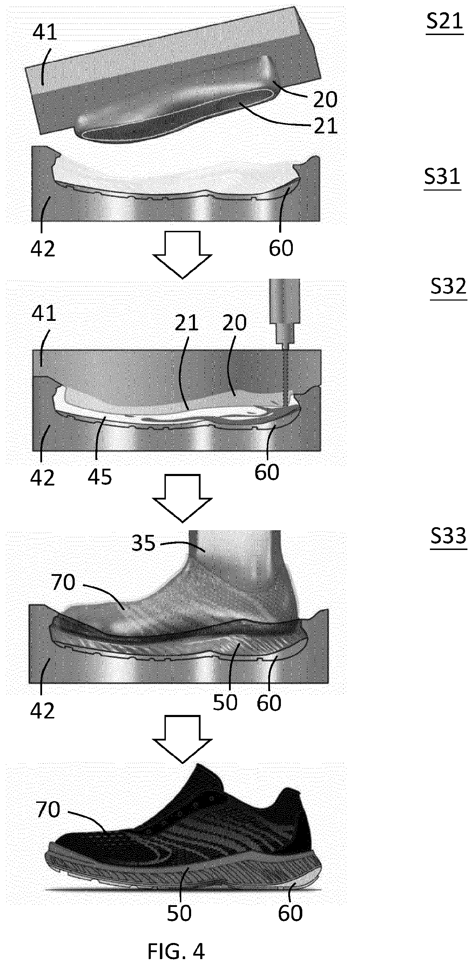

Step S20, installing or forming the upper surface model on a bottom of a production mold. The upper surface model molding manner corresponds to the midsole molding method. Specifically, the midsole molding method is an injection molding as shown in Fig. 3, or casting as shown in Fig. 4.

Step S30, placing the upper surface model inside a sole mold, then forming the midsole between the upper surface model and the sole mold.

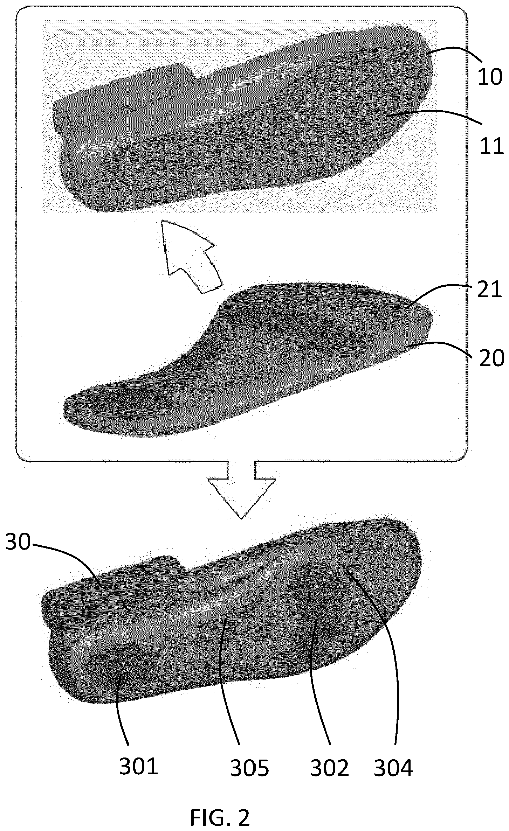

Please refer to Fig. 2 and Fig. 3, which illustrate a shoe formation with the midsole 50 by injection molding. Fig. 2 is an embodiment of the aforementioned Step S20. The production mold 10 is a shoe last. The bottom of the production mold 10 has a flat bottom surface 11 with an inward recession, for installing the sole model 20. The upper surface model 21 is placed at the bottom of the sole model 20 and faced downwardly, to produce a shoe last 30. To match the production mold 10 with the sole model 20, they can be designed in a way that the same shoe last can match multiple sole models 20, to correspond to multiple users.

The upper surface model corresponds to an adjusting position based on the personalized foot information. Specifically, the adjusting position can correspond to at least one or more of a rear-foot area 301, a fore-foot area 302, a metatarsus area 304, and an arc area 305, with no limitation. The metatarsus area 304 is located in the front section of the fore-foot area 302. The upper surface model 21 structures the upper surface of the midsole 50, and meanwhile, based on an ergonomic design, improves at least one or more of the fore-foot pressure, the rear-foot pressure, the gait information, and the foot arc information of the personalized foot information.

For example, the above-mentioned adjusting position is designed to improve foot pressure by correspondingly adjusting the surface structural distribution of the rear-foot area 301 and the arc area 305, so that the upper surface of the midsole 50 can provide appropriate support to the sole of the user. The coverage, thickness, and curvature of the adjusting position of the upper surface model 21 can all be adjusted based on the expected improvement and the ergonomic design.

In addition, the material property of the midsole 50 can also be taken into consideration when modeling the surface structure of the upper surface model 21. For example, based on the material property, some adjusting positions are higher to match the midsole 50, or in some locations (or the whole body) can adopt a harder material, or a reinforcement or an implant is configured to reinforce the support. The reinforcement or the implant is placed directly inside the sole mold 40. In particular, the molding method carries out as following conditions: the upper surface model 21 is configured with the at least one reinforcement or the implant, and during formation of the midsole 50, the reinforcement or implant remains inside the midsole.

In an embodiment, the personalized foot information is the foot information of a particular person, or the foot information of a group of people with similar conditions. For better understanding, the personalized foot information can be divided into high arc, ordinary arc, and low arc (flat foot). Based on these three conditions, corresponding upper surface models 21 can be designed.

In case of high arc, because the instep is high and the foot arc is stiff, the front sole and rear sole receive excessive pressure. The improvement manner is to provide support at the positions where the (longitudinal) arc disappears and/or to reduce the pressure on the front and rear sole. Based on at least one of the following improvement manners, the adjusting positions of the upper surface model 21 can be formed:
1. Based on the personalized foot information, create an arc area 305 on the upper surface model 21 to correspond to the position with excessively high arc, so that the midsole 50 can allow the arc to disperse the pressure on the front and rear sole;
2. Based on the fore-foot pressure information or the rear-foot pressure information, create corresponding rear-foot area 301 and fore-foot area 302 on the upper surface model 21 to relieve the pressure of the front and rear sole;
3. Based on the gait information, create ergonomic adjusting positions on the upper surface model 21 to rectify the gait, provide support, or relieve shock. The above adjusting positions can be distributed in at least one or more of the rear-foot area 301, the fore-foot area 302, the metatarsus area 304, the arc area 305, to rectify the gait and to relieve partial pressure.

In the case of ordinary arc, if the user wears shoes that match the personal foot arc, the shoes can reduce the pressure on the foot. Therefore, adjusting positions can be formed according to at least one of the following improvement manners:
1. Based on the personalized foot information, create an arc area 305 on the upper surface model 21 to correspond to the arc position, so that the foot arc is supported and cared;
2. Based on the fore-foot pressure information or rear-foot pressure information, create corresponding rear-foot area 301, fore-foot area 302, and metatarsus area 304 on the upper surface model 21 to provide support to the transverse arc;
3. Based on the gait information, create ergonomic adjusting positions on the upper surface model 21 to rectify the gait, provide support, or relieve shock. The above-mentioned adjusting positions can be distributed in at least one or more of the rear-foot area 301, the fore-foot area 302, the metatarsus area 304, and the arc area 305 to rectify the gait and to relieve partial pressure.

In the case of low arc, the improvement manner is to provide support at the position of collapse of the (longitudinal) arc, and to support the (transverse) arc. The adjusting positions can be formed according to at least one of the following improvement manners :
1. Based on the personalized foot information, create an arc area 305 on the upper surface model 21 to correspond to the position of collapse of the arc, so that the midsole 50 can provide support to the longitudinal arc;
2. Based on the fore-foot pressure information, create a corresponding metatarsus area 304 on the upper surface model 21 to provide support to the transverse arc;
3. Based on the gait information, create ergonomic adjusting positions on the upper surface model 21 to rectify the gait, provide support, or relieve shock. The aforementioned adjusting positions can be distributed in at least one or more of the rear-foot area 301, the fore-foot area 302, the metatarsus area 304, and the arc area 305, to rectify the gait and to relieve partial pressure.

Please refer to Fig. 3, which illustrates a shoe formation with the midsole 50 by injection molded. Roughly in relation to the embodiment in the above Step S30, the molding method comprises the following steps:
Step S31, placing or forming a shoe outsole 60 inside the sole mold 40.
Step S32, the shoe upper 70 is stretched over the shoe last 30 and is positioning above the shoe outsole 60. An injection area 45 is formed between the working shoe last 30 and the shoe outsole 60.
Step S33, forming the midsole 50 by injecting material into the injection area 45, in this step, the shoe upper 70 and the shoe outsole 60 are also engaged into the midsole 50. Then, removing the shoe last 30, and the shoe is formed and assembled as an integral body.

Because the injection area 45 is located between the working shoe last 30 and the shoe outsole 60, the formed upper surface of the midsole 50 already has a surface structure corresponding to the upper surface model 21. Therefore, a shoe made in this way can provide support to the foot without the need to place insoles, and can have the effect to rectify the gait and to relieve partial pressure.

Please refer to Fig. 4, which illustrates a shoe formation with the midsole 50 by casting. Correspondingly, step S20 comprises conditions as follows: the production mold 20 is the upper mold 41 of the mold, and the upper surface model 21 is formed on the inner surface of the upper mold 41. This shoe molding method comprises the following steps:
Step S31, placing the shoe outsole 60 on the sole mold 40.
Step S32, assemble the upper mold 41 and the sole mold 40, to form a casting area 46, and then form the midsole 50 through casting, so that the upper surface of the shoe outsole 60 is engaged with the midsole 50.
Step S33, the shoe upper 70 is stretched over the shoe last 30, and then the shoe upper 70 is bond with the midsole 50 to complete the shoe assembly.

In the embodiment of Fig. 4, the modeling method of the upper surface model 21 is the same as Fig. 2, and is therefore not repeated herein.

The present disclosure also provides a shoe. The shoe comprises an midsole, and the midsole is modeled using the above-mentioned midsole molding method.

It is to be noted that, the bottom surface of the midsole in the present disclosure can be adhered with an outsole to increase the friction force between the shoe and the ground. However, as long as a specific thickness or physical feature is satisfied, the bottom surface of the midsole can also be in direct contact with the ground, with no need for an outsole.

## Claims

1. A midsole molding method, comprising the following steps:
creating an upper surface model (21) of a midsole (50) based on a personalized foot information and a human factor information;
installing or forming the upper surface model (21) on a bottom of a production mold (20); and
placing the upper surface model (21) inside a sole mold (40), to form the midsole (50) between the upper surface model (21) and the sole mold (40).

2. The midsole molding method defined in Claim 1, wherein said production mold (20) is a shoe last (30), the upper surface model (21) is installed on the bottom of the shoe last (30), and the midsole (50) is formed between the shoe last (30) and the sole mold (40) through injection molding.

3. The midsole molding method defined in Claim 2, wherein, a lower portion of the shoe last (30) and an upper portion of the upper surface model (21) match each other through concave and convex surfaces.

4. The midsole molding method defined in Claim 1, wherein said production mold (20) is an upper mold (41), the upper surface model (21) is an inner surface of the upper mold (41), and the midsole (50) is formed between the upper surface model (21) and the sole mold (40) through casting.

5. The midsole molding method defined in Claim 1, wherein a shoe outsole (60) is placed or formed inside the sole mold (40), then said upper surface model (21) is placed in front of the sole mold (40).

6. The midsole molding method defined in any of Claims 1 to 5, wherein said human factor information is used to improve at least one or more of a fore-foot pressure, a rear-foot pressure, a gait information, and a foot arc information.

7. The midsole molding method defined in any of Claims 1 to 5, wherein said upper surface model (21) has at least one adjusting position corresponded to at least one or more of a metatarsus area (304), an arc area (305), a fore-foot area (302), and a rear-foot area (301).

8. The midsole molding method defined in any of Claims 1 to 7, wherein said upper surface model (21) is configured with a reinforcement or an implant.

9. The midsole molding method defined in any of Claims 1 to 8, wherein said upper surface model (21) is created based on the personalized foot information, the human factor information, and a material property of the midsole material.

10. A shoe, comprising a midsole (50), said midsole (50) being created through the molding method defined in any of Claims 1 to 9.
